# EUROPEAN PATENT APPLICATION

(11) **EP 3 029 092 A1**
(43) Date of publication of application: **08.06.2016**
(21) Application number: 14880545.0
(22) Date of filing: 20.10.2014
(51) Int. Cl.: C08J 7/04, B32B 27/18, B32B 27/30, B32B 27/36

(54) **COATING FILM**

(30) Priority: 28.01.2014 JP 2014013221
(71) Applicant: Mitsubishi Plastics, Inc., Tokyo 100-8252 (JP)
(72) Inventor: FUNATSU, Ryosuke, Maibara-shi Shiga 521-0234 (JP); KAWASAKI, Taishi, Maibara-shi Shiga 521-0234 (JP)
(74) Representative: Ter Meer Steinmeister & Partner
(86) International application number: PCT/JP2014/077791
(87) International publication number: WO 2015/114891

(57) **Abstract**

According to the present invention, there is provided a coated film that is a polyester film capable of suppressing generation of static electricity and having suitable release properties and excellent transparency, and can be suitably used in applications, for example, as a release film used for a processing film used in various processes or a protective film, etc. The present invention relates to a coated film comprising a polyester film and a coating layer formed on at least one surface of the polyester film, the coating layer being prepared from a coating solution comprising a release agent comprising a long-chain alkyl group-containing compound, an antistatic agent, and an acrylic resin or polyvinyl alcohol.

## Description

### TECHNICAL FIELD

The present invention relates to a polyester film that can be suitably used as a release film, and more particularly, relates to a transparent release polyester film that can be used, for example, as a processing film used in various processes, including those films for transfer such as in-mold transfer, for production of flexible printed wiring boards, for process sheets for production of plastic sheets, etc., or a protective film such as a cover tape, and in particular, can suppress generation of static electricity which is caused during the processes or due to peeling and prevent occurrence of deposition of dust and small dirt.

### BACKGROUND ART

Polyester films typically such as polyethylene terephthalate films or polyethylene naphthalate films have been conventionally used in various applications because of excellent properties such as mechanical strength, dimensional stability, flatness, heat resistance, chemical resistance and optical properties as well as excellent cost performance. However, when using the polyester film as a release film, the film tends to be insufficient in releasing properties against various resins and adhesives, and therefore has problems such as lack of practicability. For this reason, there have been conventionally made various studies on a method of laminating a release coating film on a surface of the polyester film. For example, there has been proposed the method of applying a long-chain alkyl group-containing resin onto a surface of a polyester film to form a laminated film (Patent Literatures 1 and 2).

The polyester film tends to suffer from generation of static electricity due to contact friction or peeling caused in the production process or during use of the product, so that dust and small dirt tends to be readily deposited on the polyester film. Therefore, there tends to occur a risk of contamination of the polyester film in the process or inclusion of foreign substances therein. In addition, in the process, there tends to arise such a problem that film supply or discharge properties of the film, for example, multi-sheet feeding or inferior slip of the film are deteriorated. For this reason, in the applications in which inclusion of foreign substances in the film or electrification thereof should be avoided, there have been proposed a method of applying and laminating an antistatic agent on a surface of the polyester film (Patent Literature 3) and the like.

A releasing coating film and an antistatic coating film may be processed as separate coating film. From a viewpoint of suppressing increase in number of steps of the production process, it is preferred to impart releasing properties and antistatic properties to the same coating film. However, when processing these coating films as the same coating film, there tends to arise such a problem that the releasing properties and the antistatic properties are hardly obtained or the resulting coating film may be deteriorated in appearance. The coating film having a poor appearance tends to fail to exhibit uniform releasing properties and antistatic properties due to unevenness of the coating film, and therefore tends to lack stability of the performance. Further, there tends to occur deterioration in visibility of the product through the release film, thereby causing a possibility of overlooking defects in the product during the inspection process.

### CITATION LIST

### PATENT LITERATURE

Patent Literature 1: Japanese Patent Application Laid-Open (KOKAI) No. 2002-240016
Patent Literature 2: Japanese Patent Application Laid-Open (KOKAI) No. 2006-022136
Patent Literature 3: Japanese Patent Application Laid-Open (KOKAI) No. 7-26223(1995)

### SUMMARY OF INVENTION

### TECHNICAL PROBLEM

The present invention has been accomplished in view of the above conventional problems. An object of the present invention is to provide a coated film that can be used as a processing film used in various processes, including those films for transfer such as in-mold transfer, for production of flexible printed wiring boards, for process sheets for production of plastic sheets, etc., or a protective film such as a cover tape, and can suppress generation of static electricity and have suitable releasing properties and excellent transparency.

### SOLUTION TO PROBLEM

As a result of the present inventors' earnest study in view of the above problems, it has been found that the above problems can be readily solved by using a coated film having a specific structure. The present invention has been attained on the basis of this finding.

That is, in an aspect of the present invention, there is provided a coated film comprising a polyester film and a coating layer formed on at least one surface of the polyester film, which coating layer is prepared from a coating solution comprising:
- a release agent comprising a long-chain alkyl group-containing compound,
- an antistatic agent, and
- an acrylic resin or polyvinyl alcohol.

### ADVANTAGEOUS EFFECTS OF INVENTION

In accordance with the present invention, it is possible to provide a release polyester film that can exhibit not only excellent releasing properties and transparency but also less electrification when used as various processing films for transfer such as in-mold transfer, etc. Therefore, the present invention has a high utility value from industrial viewpoints.

### DESCRIPTION OF EMBODIMENTS

The polyester film constituting the coated film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate and the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known compounds may be used as the polymerization catalyst. Examples of the polymerization catalyst include an antimony compound, a titanium compound, a germanium compound, a manganese compound, an aluminum compound, a magnesium compound and a calcium compound.

For the main purposes of imparting easy-slipping properties to the resulting polyester film and preventing occurrence of flaws in the resulting polyester film in the respective steps, particles may be compounded in the polyester. When compounding the particles in the polyester, the kind of particles to be compounded in the polyester is not particularly limited as long as the particles can impart easy-slipping properties to the polyester film. Specific examples of the particles include inorganic particles such as particles of silica, calcium carbonate, magnesium carbonate, barium carbonate, calcium sulfate, calcium phosphate, magnesium phosphate, kaolin, aluminum oxide and titanium oxide, and organic particles such as particles of acrylic reins, styrene resins, urea resins, phenol resins, epoxy resins and benzoguanamine resins, etc. Further, there may also be used deposited particles obtained by precipitating and finely dispersing a part of metal compounds such as a catalyst during the process for production of the polyester.

On the other hand, the shape of the particles compounded in the polyester is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the above particles is usually in the range of not more than 5 *µ*m and preferably 0.1 to 3 *µ*m. When the average particle diameter of the particles is more than 5 *µ*m, the obtained film tends to have an excessively coarse surface roughness, so that, for example, when the obtained film is used for transfer, a surface shape of a member to be transferred with the film tends to be adversely affected.

The content of the particles in the polyester is usually not more than 5% by weight and preferably 0.0003 to 3% by weight. When the content of the particles in the polyester is more than 5% by weight, the resulting film tends to be insufficient in transparency.

The method of adding the particles to the polyester is not particularly limited, and any conventionally known methods can be suitably used therefor. For example, the particles may be added at any optional stages in the process for production of the polyester constituting respective layers of the film. The particles are preferably added to the polyester after completion of the esterification reaction or transesterification reaction.

Meanwhile, the polyester may also comprise, in addition to the above particles, known additives such as an antioxidant, an antistatic agent, a thermal stabilizer, a lubricant, a dye, a pigment, etc., if required.

The thickness of the polyester film is not particularly limited, and the polyester film may have any thickness as long as it can be produced while maintaining a suitable film shape. In view of a mechanical strength, handling properties and a productivity of the polyester film, the thickness of the polyester film is usually in the range of 5 to 300 *µ*m and preferably 10 to 150 *µ*m.

As the process of forming the polyester film, there may be used conventionally known film-forming processes, though the present invention is not particularly limited thereto. For example, when producing a biaxially oriented polyester film, there may be used the following production process. That is, the above-mentioned polyester raw material is extruded from a die using an extruder in the form of a molten sheet, and the molten sheet is then cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is is drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn sheet is further drawn in the direction perpendicular to the drawing direction of the first stage. In this case, the drawing temperature is usually 70 to 170°C, and the draw ratio is usually 2.5 to 7 times and preferably 3.0 to 6 times. Successively, the resulting biaxially drawn sheet is heat-set at a temperature of 180 to 270°C under a tension or under relaxation within 30% to obtain a biaxially oriented film. In the above drawing steps, there may also be used the method in which the drawing in each direction is carried out in two or more stages. In such a case, the multi-stage drawing is preferably performed such that the draw ratio in each of the two directions finally falls within the above-specified range.

In addition, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 270°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the coated film of the present invention is explained. As the method of forming the coating layer, there may be used either an in-line coating method in which the surface of the polyester film is subjected to coating treatment during the film-forming step of the polyester film, or an off-line coating method in which the polyester film produced is once transferred to an outside of the film production system and subjected to coating treatment. Among these methods, the coating layer is preferably formed by the in-line coating method.

The in-line coating method is a method in which the coating step is carried out during the process for production of the polyester film, more specifically, such a method in which the coating step is carried out in an optional stage from melt-extrusion of the polyester up to taking-up of the film through the drawing and heat-setting steps. In general, any of the undrawn sheet obtained by melting and rapidly cooling the polyester, the monoaxially drawn film obtained by drawing the undrawn sheet, the biaxially oriented film before the heat-setting, or the film after the heat-setting but before the taking-up may be subjected to the coating step. For example, when the film is produced by a sequential biaxial drawing method, the method in which the monoaxially drawn film obtained by drawing the undrawn sheet, in particular, in a longitudinal direction (length direction) thereof is subjected to the coating step, and then the resulting coated monoaxially drawn film is further drawn in a lateral direction thereof is more excellent, though the present invention is not particularly limited thereto. The above method has merits in view of production costs because formation of the film and coating for forming the coating layer can be performed at the same time. In addition, since the drawing is carried out after completion of the coating, the thickness of the coating layer may vary depending upon the draw ratio, so that formation of a thin coating film is facilitated as compared to the off-line coating method. Also, when providing the coating layer on the film prior to the drawing, the coating layer and the base material film can be drawn together, so that adhesion between the coating layer and the base material film can be strengthened. Further, upon production of the biaxially oriented polyester film, when the film is drawn while grasping end portions of the film with clips, etc., it is possible to constrain the film in both of the longitudinal and lateral directions thereof. This allows the polyester film to be exposed to high temperature while keeping a flatness thereof without formation of wrinkles, etc., when subjected to heat-setting. Therefore, the temperature used in the heat-setting treatment to be conducted after the coating can be increased up to a high temperature which has not been reached in the other conventional methods, so that the film-forming properties of the coating layer can be enhanced, and the adhesion between the coating layer and the base material film can be more strengthened. Furthermore, the resulting coating layer becomes firm, and therefore can be prevented from suffering from delamination and can be enhanced in releasing properties and antistatic properties.

In the present invention, it is essentially required to provide the coating layer prepared from a coating solution comprising a release agent comprising a long-chain alkyl group-containing compound, an antistatic agent, and an acrylic resin or polyvinyl alcohol.

As a result of studying combined use of the release agent and the antistatic agent in order to impart good releasing properties and antistatic properties to the coating film, it has been found that when using the release agent comprising a long-chain alkyl group-containing compound, the resulting film tends to be deteriorated in transparency. In consequence, the present inventors have performed various studies, and it has been first found that when further adding at least one material selected from the group consisting of an acrylic resin and polyvinyl alcohol to the coating layer, the obtained film can be enhanced in transparency and can exhibit higher applicability for a protective film, etc.

The coating layer of the present invention is provided to enhance a releasing performance suitable for a processing film used in various processes, for example, those films for transfer such as in-mold transfer, for production of flexible printed wiring boards, for process sheets for production of plastic sheets, etc., or a protective film such as a cover tape, and suppress electrification of the film.

The long-chain alkyl group-containing compound used for forming the coating layer is used as the release agent for enhancing releasing properties of the film.

The long-chain alkyl group-containing compound includes those compounds comprising a linear or branched alkyl group usually having not less than 6 carbon atoms, preferably not less than 8 carbon atoms and more preferably not less than 12 carbon atoms. Examples of the alkyl group include a hexyl group, an octyl group, a decyl group, a lauryl group, an octadecyl group, a behenyl group, etc. The upper limit of the number of carbon atoms in the alkyl group is usually 30. Examples of the long-chain alkyl group-containing compound include various polymer compounds comprising a long-chain alkyl group on a side chain thereof, various long-chain alkyl group-containing amine compounds, various long-chain alkyl group-containing ether compounds and various long-chain alkyl group-containing quaternary ammonium salts. In view of a good heat resistance and less staining of the film, the long-chain alkyl compound is preferably in the form of a polymer compound. Also, from the standpoint of effectively attaining good releasing properties, the long-chain alkyl group-containing compound is more preferably in the form of the polymer compound comprising a long-chain alkyl group on a side chain thereof.

The polymer compound comprising a long-chain alkyl group on a side chain thereof may be produced by reacting a polymer compound comprising a reactive group with a compound comprising an alkyl group capable of reacting with the reactive group. Examples of the above reactive group include a hydroxyl group, an amino group, a carboxyl group, an acid anhydride, etc. Examples of the polymer compound comprising these reactive group include polyvinyl alcohol, polyethylene imine, polyethylene amine, reactive group-containing polyester resins, reactive group-containing poly(meth)acrylic resins, etc. Of these compounds, in view of good releasing properties and easiness of handling, preferred is polyvinyl alcohol.

Examples of the above compound comprising an alkyl group capable of reacting with the reactive group include long-chain alkyl group-containing isocyanates such as hexyl isocyanate, octyl isocyanate, decyl isocyanate, lauryl isocyanate, octadecyl isocyanate and behenyl isocyanate; long-chain alkyl group-containing acid chlorides such as hexyl chloride, octyl chloride, decyl chloride, lauryl chloride, octadecyl chloride and behenyl chloride; long-chain alkyl group-containing amines; long-chain alkyl group-containing alcohols; and the like. Of these compounds, in view of good releasing properties and easiness of handling, preferred are long-chain alkyl group-containing isocyanates, and more preferred is octadecyl isocyanate.

In addition, the polymer compound comprising a long-chain alkyl group on a side chain thereof may also be produced by polymerizing a long-chain alkyl (meth)acrylate or copolymerizing the long-chain alkyl (meth)acrylate with the other vinyl group-containing monomer. Examples of the long-chain alkyl (meth)acrylate include hexyl (meth)acrylate, octyl (meth)acrylate, decyl (meth)acrylate, lauryl (meth)acrylate, octadecyl (meth)acrylate, behenyl (meth)acrylate, etc.

In the present invention, it is essentially required to use the long-chain alkyl group-containing compound in order to enhance releasing properties of the film. In addition, the long-chain alkyl group-containing compound may also be used in combination with a plurality of conventionally known release agents. Examples of the conventionally known release agents include a wax, a fluorine compound, a silicone compound, etc.

Examples of the antistatic agent used for forming the coating layer include an ion-conductive compound such as an ammonium group-containing compound, a polyether compound, a sulfonic acid compound and a betaine compound, and a π electron conjugated polymer compound such as polyacetylene-based polymers, polyphenylene-based polymers, polyaniline-based polymers, polypyrrole-based polymers, polyisothianaphthene-based polymers and polythiophene-based polymers. These compounds are used to impart antistatic properties to the film. Among them, the ion-conductive compound is preferred, and the ammonium group-containing compound is more preferred. In general, the coating layer prepared from the coating solution containing the π electron conjugated conductive polymer, for example, polythiophene-based polymers and polyaniline-based polymers, is strongly tinted. Therefore, the coating layer prepared from the coating solution containing the π electron conjugated conductive polymer tends to be occasionally unsuitable for use in optical applications requiring high transparency. In addition, the π electron conjugated conductive polymer paint is generally more expensive than an ordinary ion-conductive paint. Therefore, from the standpoint of the production cost, the ion-conductive antistatic agent is also preferably used.

The ammonium group-containing compound means a compound having an ammonium group in a molecule thereof, and is preferably in the form of a polymer compound comprising an ammonium group. There may be used, for example, a polymer comprising a monomer component having an ammonium group and an unsaturated double bond.

Specific examples of the above polymer include polymers having a constitutional unit represented by the following formula (1) or (2) as a repeating unit. These polymers may be in the form of a homopolymer or a copolymer, or a copolymer obtained by further copolymerizing the polymer with the other plural components. From the standpoint of enhancing compatibility with the other materials and transparency of the resulting coating film, preferred are polymers having a constitutional unit represented by the following formula (1) as a repeating unit. In addition, from the standpoint of attaining high antistatic performance and good heat resistance, more preferred are polymers having a constitutional unit represented by the following formula (2) as a repeating unit.

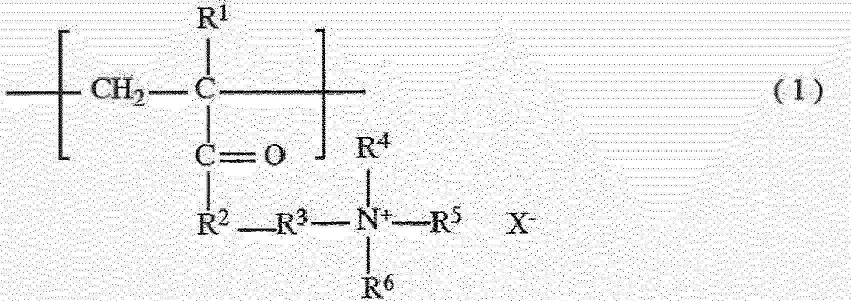

In the above formula (1), R² is -O- or -NH-; R³ is an alkylene group or the other structure capable of establishing the structure represented by the formula (1); and R¹, R⁴, R⁵ and R⁶ are respectively a hydrogen atom, an alkyl group, a phenyl group or the like in which the alkyl group and the phenyl group may be substituted with the following substituent groups. Examples of the substituent groups include a hydroxy group, an amide group, an ester group, an alkoxy group, a phenoxy group, a naphthoxy group, a thioalkoxy group, a thiophenoxy group, a cycloalkyl group, a trialkylammoniumalkyl group, a cyano group and a halogen.

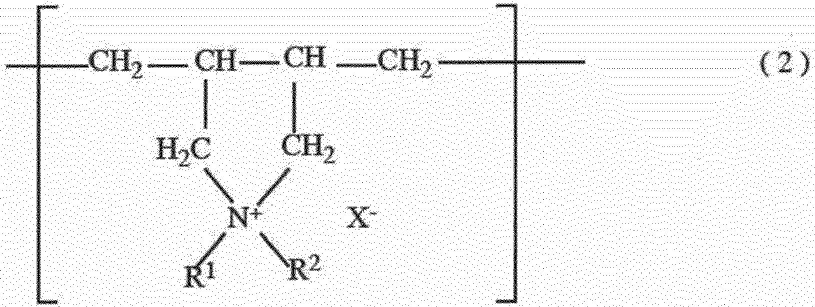

In the above formula (2), R¹ and R² are each independently a hydrogen atom, an alkyl group, a phenyl group or the like in which the alkyl group and the phenyl group may be substituted with the following substituent groups. Examples of the substituent groups include a hydroxyl group, an amide group, an ester group, an alkoxy group, a phenoxy group, a naphthoxy group, a thioalkoxy group, a thiophenoxy group, a cycloalkyl group, a trialkylammoniumalkyl group, a cyano group and a halogen. Also, R¹ and R² may be chemically bonded to each other. Examples of the bonded groups include -(CH₂)ₘ- (m = integer of 2 to 5), -CH(CH₃)CH(CH₃)-, -CH=CH-CH=CH-, -CH=CH-CH=N-, - CH=CH-N=C-, -CH₂OCH₂-, -(CH₂)₂O(CH₂)₂- and the like.

The polymers having a constitutional unit represented by the above formula (1) as a repeating unit are preferably copolymerized with the other repeating units from the standpoint of enhancing compatibility with the other materials and improving transparency of the resulting film or from the standpoint of further enhancing releasing properties of the resulting film. Examples of the other repeating units include an alkyl acrylate such as methyl acrylate, ethyl acrylate, propyl acrylate and butyl acrylate, and an alkyl methacrylate such as methyl methacrylate, ethyl methacrylate, propyl methacrylate and butyl methacrylate.

The polymers having a constitutional unit represented by the above formula (2) as a repeating unit are preferably copolymerized with the other repeating units from the standpoint of reducing deterioration in releasing properties of the resulting film. Examples of the other repeating units include the above alkyl acrylate, the above alkyl methacrylate and an acrylamide such as n-methylol acrylamide.

In addition, a homopolymer having a constitutional unit represented by the above formula (2) as a repeating unit is preferably used from the standpoint of further enhancing antistatic performance of the resulting film.

In the above formulae (1) and (2), X- may be appropriately selected in such a range as not to deviate from the scope of the present invention. Examples of X-include a halogen ion, a sulfonate ion, a phosphate ion, a nitrate ion, an alkyl sulfonate ion and a carboxylate ion.

The polymers comprising the constitutional unit represented by the above formula (1) are preferably used because the resulting coating layer is excellent in transparency. However, in the coating/drawing method, the resulting coating layer tends to be sometimes deteriorated in heat resistance. Therefore, when using the polymers in the coating/drawing method, it is preferred that X- is not a halogen ion.

The compounds comprising the constitutional unit represented by the above formula (2) or the other ammonium salt group in a polymer skeleton thereof are preferably used because they are excellent in heat resistance.

Also, the polymers obtained by copolymerizing the constitutional unit represented by the above formula (1) or (2) with a polyethylene glycol-containing (meth)acrylate have a soft structure, and therefore are preferably used in the coating/drawing method because the resulting coating layer is excellent in uniformity.

Alternatively, the coating layer having the same excellent uniformity as described above may also be formed by applying a coating solution comprising a polyethylene glycol-containing (meth)acrylate polymer.

Specific examples of the polyethylene glycol-containing (meth)acrylate polymer include polymers produced from polyethylene glycol monoacrylate, polypropylene glycol monoacrylate, polyethylene glycol diacrylate (whose polyethylene glycol unit preferably has a polymerization degree of 4 to 14), polypropylene glycol diacrylate, polytetramethylene glycol diacrylate, poly(ethylene glycol-tetramethylene glycol) diacrylate, poly(propylene glycol-tetramethylene glycol) diacrylate, polyethylene glycol-polypropylene glycol-polyethylene glycol diacrylate, polypropylene glycol-polybutylene glycol monomethacrylate, methoxy polyethylene glycol monomethacrylate, methoxy polyethylene glycol monoacrylate, octoxy polyethylene glycol-polypropylene glycol monomethacrylate, octoxy polyethylene glycol-polypropylene glycol monoacrylate, lauroxy polyethylene glycol monomethacrylate, lauroxy polyethylene glycol monoacrylate, stearoxy polyethylene glycol monomethacrylate, stearoxy polyethylene glycol monoacrylate, allyloxy polyethylene glycol monomethacrylate, allyloxy polyethylene glycol monoacrylate, etc., as a starting material.

Also, the number-average molecular weight of the ammonium group-containing compound is 1000 to 500000, preferably 2000 to 350000, and more preferably 5000 to 200000. When the number-average molecular weight of the ammonium group-containing compound is less than 1000, the resulting coating film tends to have a weak strength or tends to be deteriorated in heat-resistant stability. On the other hand, when the number-average molecular weight of the ammonium group-containing polymer is more than 500000, the coating solution tends to exhibit an excessively high viscosity and therefore tends to be deteriorated in handling properties and coatability.

Upon forming the coating layer of the film, at least one material selected from the group consisting of an acrylic resin and polyvinyl alcohol is used in order to enhance transparency of the resulting film.

The acrylic resin is in the form of a polymer obtained from a polymerizable monomer having a carbon-carbon double bond such as, typically, an acrylic monomer and a methacrylic monomer. The polymer may be in the form of either a homopolymer or a copolymer. The polymer may also include a copolymer of the polymer with the other polymer (such as, for example, a polyester and a polyurethane). Examples of the copolymer include a block copolymer and a graft copolymer. In addition, the polymer may also include a polymer obtained by polymerizing the polymerizable monomer having a carbon-carbon double bond in a polyester solution or a polyester dispersion (which may also be in the form of a mixture of the polymers). Further, the polymer may also include a polymer obtained by polymerizing the polymerizable monomer having a carbon-carbon double bond in a polyurethane solution or a polyurethane dispersion (which may also be in the form of a mixture of the polymers). Similarly, the polymer may also include a polymer obtained by polymerizing the polymerizable monomer having a carbon-carbon double bond in the other polymer solution or the other polymer dispersion (which may also be in the form of a mixture of the polymers). The acrylic resin may also comprise a hydroxyl group or an amino group. From the standpoint of suppressing deterioration in transparency of the resulting film due to the coating layer, the acrylic resin preferably comprises a hydroxyl group.

The above polymerizable monomer having a carbon-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl propionate; various silicon-containing polymerizable monomers such as γ-methacryloxypropyl trimethoxysilane and vinyl trimethoxysilane; various phosphorus-containing vinyl-based monomers; various halogenated vinyl-based monomers such as vinyl chloride and vinylidene chloride; and various conjugated dienes such as butadiene.

When the acrylic resin comprises a hydroxyl group, a hydroxyl value of the acrylic resin is preferably 2 to 100 mgKOH/g, and more preferably 5 to 50 mgKOH/g. When the hydroxyl value of the acrylic resin lies in the above-specified ranges, the resulting film can be improved in coating appearance and transparency.

The polyvinyl alcohol is a compound having a polyvinyl alcohol moiety. As the polyvinyl alcohol, there may be used conventionally known polyvinyl alcohols including modified compounds obtained, for example, by partially acetalizing or butyralizing polyvinyl alcohol. The polymerization degree of the polyvinyl alcohol is not particularly limited, and is usually not less than 100, and preferably in the range of 300 to 40000. When the polymerization degree of the polyvinyl alcohol is less than 100, the resulting coating layer tends to be deteriorated in water resistance. The saponification degree of the polyvinyl alcohol is also not particularly limited, and there may be practically used a saponified product of polyvinyl acetate having a saponification degree of usually not less than 70 mol%, preferably 70 to 99.9 mol%, more preferably 80 to 97 mol% and even more preferably 86 to 95 mol%.

Upon forming the coating layer, various polymers other than the acrylic resin and the polyvinyl alcohol as well as crosslinking agents may be used in combination with the acrylic resin and the polyvinyl alcohol.

Specific examples of the polymers include polyester resins, urethane resins, polyalkylene glycols, polyalkylene imines, methyl cellulose, hydroxy cellulose, starches, etc.

The polyester resins may be those polyester resins produced, for example, from the following polycarboxylic acids and polyhydroxy compounds as main constituents. More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, a trimellitic acid monopotassium salt and ester-forming derivatives thereof. Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethyleneoxide glycol, dimethylol propionic acid, glycerin, trimethylol propane, sodium dimethylol ethyl sulfonate and potassium dimethylol propionate. The polyester resins may be synthesized by appropriately selecting one or more compounds from the aforementioned respective kinds of compounds and subjecting these compounds to polycondensation reaction by an ordinary method.

The urethane resins are in the form of a polymer compound having a urethane bond in a molecule thereof, and may be usually produced by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

Examples of the polyether polyols include polyethylene glycol, polypropylene glycol, polyethylene/propylene glycol, polytetramethylene ether glycol and polyhexamethylene ether glycol.

Examples of a polyisocyanate compound used for producing the urethane resins include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α' ,α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resins are synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The urethane resins may be dispersed or dissolved in a solvent as a medium, and is preferably dispersed or dissolved in water as the medium. In order to disperse or dissolve the urethane resins in water, there may be used those urethane resins of a forcibly emulsifiable type which can be dispersed or dissolved using an emulsifier, or those urethane resins of a self-emulsifiable type or a watersoluble type which are obtained by introducing a hydrophilic group into the urethane resins. Among these urethane resins, in particular, self-emulsifiable type urethane resins which are ionomerized by introducing an ionic group into a structure of the urethane resins are preferred because they are excellent in storage stability of the coating solution as well as in water resistance and transparency of the resulting coating layer. Examples of the ionic group to be introduced include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resins, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one of the components including the polyol, the polyisocyanate, the chain extender or the like. In particular, there is preferably used the method in which a carboxyl group-containing diol is used to introduce a desired amount of a carboxyl group into the urethane resins by suitably adjusting an amount of the diol charged. For example, the diol used in the polymerization for production of the urethane resins may be copolymerized with dimethylol propionic acid, dimethylol butanoic acid, bis-(2-hydroxyethyl)propionic acid, bis-(2-hydroxyethyl)butanoic acid, etc. Further, the carboxyl group is preferably in the form of a salt obtained by neutralizing the carboxyl group with ammonia, an amine, an alkali metal, an inorganic alkali, etc. Of these substances used for the neutralization, preferred are ammonia, trimethylamine and triethylamine. When using such a polyurethane resin, the carboxyl group thereof from which the neutralizing agent is removed in the drying step after the coating step may be used as a crosslinking reaction site which can be reacted with other crosslinking agents. As a result, the above-described urethane resin is excellent in stability when preserved in the form of a solution before being coated, and further the coating layer obtained therefrom can be further improved in durability, solvent resistance, water resistance, anti-blocking properties, etc.

Specific examples of the crosslinking agent include a melamine compound, an oxazoline compound, an epoxy compound, an isocyanate compound, a carbodiimide compound, a silane coupling compound, etc. Among these crosslinking agents, from the standpoint of attaining high crosslinking density, preferred is a melamine compound. Further, these crosslinking agents may be used in combination of any two or more thereof.

Examples of the melamine compound include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by subjecting a urea or the like to co-condensation with a part of melamine. Further, a catalyst may also be used to enhance reactivity of the resulting melamine compound.

The oxazoline compound is preferably in the form of a polymer having an oxazoline group which may be either a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is preferred because of industrial availability thereof. The other monomers used in the copolymer are not particularly limited as long as they are monomers that are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl, cyclohexyl or the like); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl, cyclohexyl or the like); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride and vinylidene chloride; and α,β-unsaturated aromatic monomers such as styrene and α-methyl styrene. These other monomers may be used alone or in combination of any two or more thereof.

The epoxy compound is a compound having an epoxy group in a molecule thereof. Examples of the epoxy compound include condensation products of epichlorohydrin with a hydroxyl group of ethylene glycol, polyethylene glycol, glycerol, polyglycerol, bisphenol A, etc., or an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

Meanwhile, these crosslinking agents are used for improving a performance of the coating layer by allowing the crosslinking agents to react with the compounds contained therein during a drying step or a film-forming step thereof. Therefore, it is estimated that the resulting coating layer comprises the unreacted crosslinking agent, compounds obtained after the reaction, or a mixture thereof.

Also, unless the subject matter of the present invention is adversely affected, upon forming the coating layer, for the purpose of improving anti-blocking properties, slipping properties, etc., of the resulting coating layer, particles may be used in combination with the aforementioned materials in the coating layer.

Further, unless the subject matter of the present invention is adversely affected, upon forming the coating layer, there may also be used various additives such as a defoaming agent, a coatability improver, a thickening agent, an organic lubricant, an ultraviolet absorber, an antioxidant, a foaming agent, a dye and a pigment.

The content of the release agent comprising a long-chain alkyl group-containing compound in the coating solution is usually in the range of 8 to 70% by weight, preferably 10 to 60% by weight and more preferably 15 to 50% by weight based on a total amount of whole non-volatile components in the coating solution. When the content of the release agent comprising a long-chain alkyl group-containing compound in the coating solution is less than 8% by weight, the resulting coating layer tends to fail to exhibit a sufficient releasing performance. When the content of the release agent comprising a long-chain alkyl group-containing compound in the coating solution is more than 70% by weight, the resulting coating layer tends to fail to exhibit sufficient antistatic properties and transparency owing to a less amount of the other components.

The content of the antistatic agent in the coating solution is usually in the range of 10 to 70% by weight, preferably 15 to 60% by weight and more preferably 20 to 50% by weight based on a total amount of whole non-volatile components in the coating solution. When the content of the antistatic agent in the coating solution is less than 10% by weight, the resulting coating layer tends to fail to exhibit a sufficient antistatic performance. When the content of the antistatic agent in the coating solution is more than 70% by weight, the resulting coating layer tends to fail to exhibit sufficient releasing properties and transparency owing to a less amount of the other components.

The content of the acrylic resin or polyvinyl alcohol in the coating solution is usually in the range of 3 to 70% by weight, preferably 5 to 60% by weight and more preferably 10 to 50% by weight based on a total amount of whole non-volatile components in the coating solution. When the content of the acrylic resin or polyvinyl alcohol in the coating solution is out of the above-specified range, the resulting coating layer tends to fail to exhibit sufficient transparency or tends to fail to exhibit sufficient antistatic properties and releasing properties.

The analysis of the components contained in the coating layer may be conducted, for example, by analyzing methods such as TOF-SIMS, ESCA and fluorescent X-ray analysis.

When forming the coating layer by the in-line coating method, the coated film is preferably produced by the method in which a coating solution having a concentration of about 0.1 to about 50% by weight in terms of a solid content thereof is prepared as an aqueous solution or a water dispersion comprising a series of the aforementioned compounds, and the thus prepared coating solution is applied onto the polyester film. The coating solution may also comprise a small amount of an organic solvent for the purpose of improving a dispersibility in water, film-forming properties, etc., unless the subject matter of the present invention is adversely affected by addition of the organic solvent. The organic solvents may be used alone, or may be appropriately used in the form of a mixture of any two or more thereof.

The film thickness of the coating layer is usually in the range of 0.005 to 1 *µ*m, preferably 0.01 to 0.2 *µ*m, more preferably 0.02 to 0.1 *µ*m and even more preferably 0.02 to 0.04 *µ*m. When the film thickness of the coating layer is more than 1 *µ*m, the resulting coating layer tends to be deteriorated in appearance and transparency. When the film thickness of the coating layer is less than 0.005 *µ*m, the resulting coating layer tends to fail to exhibit a sufficient releasing properties and antistatic properties.

As the method of forming the coating layer, there may be used conventionally known coating methods, for example, such as a gravure coating method, a reverse roll coating method, a die coating method, an air doctor coating method, a blade coating method, a rod coating method, a bar coating method, a curtain coating method, a knife coating method, a transfer roll coating method, a squeeze coating method, an impregnation coating method, a kiss-roll coating method, a spray coating method, a calendar coating method and an extrusion coating method.

The drying and curing conditions used upon forming the coating layer are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 270°C for 3 to 200 sec.

In addition, irrespective of any of the off-line coating method and in-line coating method, the above heat-setting may be used in combination with irradiation with an active energy beam such as UV irradiation, if required. The polyester film constituting the coated film may also be previously subjected to surface treatments such as corona treatment and plasma treatment.

The peel force of the polyester film relative to an adhesive tape is usually not more than 2000 mN/cm, preferably not more than 1700 mN/cm and more preferably not more than 1200 mN/cm. When the peel force is more than 2000 mN/cm, a material applied onto the release layer tends to be hardly peeled off.

The surface resistance of the polyester film is usually not more than 5 x 10¹² Ω, preferably not more than 5 x 10¹¹ Ω, more preferably not more than 1 x 10¹¹ Ω and even more preferably 1 x 10¹⁰ Ω.

The film haze of the polyester film is usually not more than 2.5%, preferably not more than 2.0%, more preferably not more than 1.5% and even more preferably not more than 1.3%.

### EXAMPLES

The present invention is described in more detail below by Examples. However, these Examples are only illustrative and not intended to limit the present invention thereto, and any changes and modifications are possible unless departing from the scope of the present invention. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter:

Using TEM ("H-7650" manufactured by Hitachi High-Technologies Corp.; acceleration voltage: 100 V), the coating layer was observed to measure particle diameters of 10 particles therein and calculate an average particle diameter thereof as an average value of the thus measured ten particle diameters.

### (3) Method of measuring film thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi High-Technologies Corp.; acceleration voltage: 100 V).

### (4) Evaluation of peel force:

An adhesive tape "No. 31B" produced by Nitto Denko Corporation was press-contacted and attached onto a surface of a release layer of a sample film by reciprocating a 2 kg rubber roller thereover by one stroke, and the resulting laminated film was allowed to stand at room temperature for 1 hr and then subjected to measurement of a peel force thereof. Upon the measurement of the peel force, the film was subjected to 180° peel test at an elastic stress rate of 300 mm/min using a tensile tester "Ezgraph" produced by Shimadzu Corporation.

### (5) Measurement of haze of film:

The haze of the sample film was measured using a haze meter "HM-150" manufactured by Murakami Color Research Laboratory Co., Ltd., according to JIS K 7136.

### (6) Method of evaluating antistatic properties:

Using a high resistance meter "HP4339B" and a measuring electrode "HP16008B" both manufactured by Hewlett Packard Japan Ltd., after the sample film was fully moisture-controlled in a measuring atmosphere of 23°C and 50% RH for 30 min, the surface resistance of the sample film was measured.

The polyesters used in Examples and Comparative Examples were prepared as follows.

### <Method of producing polyester (A)>

One hundred parts by weight of dimethyl terephthalate and 60 parts by weight of ethylene glycol as starting materials were charged together with 0.09 part by weight of magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with 0.04 part by weight of ethyl acid phosphate. Further, the reaction mixture thus obtained was mixed with 0.04 part by weight of antimony trioxide, followed by subjecting the mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, an agitation power in the reaction vessel was monitored, and the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel. As a result, it was confirmed that the thus obtained polyester (A) had an intrinsic viscosity of 0.63.

### <Method of producing polyester (B)>

The same procedure as described in the above method of producing the polyester (A) was conducted except that after adding 0.04 part by weight of ethyl acid phosphate, 0.2 part by weight of silica particles having an average particle diameter of 2 *µ*m, and 0.04 part by weight of antimony trioxide were added, and the polycondensation reaction was terminated at the time at which a viscosity of the reaction solution reached the value corresponding to an intrinsic viscosity of 0.65, thereby obtaining a polyester (B). As a result, it was confirmed that the thus obtained polyester (B) had an intrinsic viscosity of 0.65.

Examples of the compounds constituting the coating layer are as follows.

### (Examples of compounds)

### ·Release agent (long-chain alkyl group-containing compound): (IA)

A four-necked flask was charged with 200 parts of xylene and 600 parts of octadecyl isocyanate, and the contents of the flask were heated while stirring. From the time at which reflux of xylene was initiated, 100 parts of polyvinyl alcohol having an average polymerization degree of 500 and a saponification degree of 88 mol% were slowly added to the flask at the intervals of 10 min over about 2 hr. After completion of addition of polyvinyl alcohol, the contents of the flask were further refluxed for 2 hr, and the reaction was stopped. The obtained reaction mixture was cooled to about 80°C and then added in methanol, thereby obtaining a reaction product in the form of a white precipitate. The thus obtained precipitate was removed by filtration, and 140 parts of xylene were added thereto to completely dissolve the precipitate therein, followed by adding methanol again to the resulting solution to obtain a precipitate. The above procedure was repeated several times. Thereafter, the obtained precipitate was washed with methanol, and then dried and pulverized to obtain the release agent as aimed.

### ·Antistatic agent: (IIA)

Polymer compound having a number-average molecular weight of 30000 which was obtained by copolymerizing a constitutional unit represented by the following formula 3-1 and a constitutional unit represented by the following formula 3-2 at a weight ratio of 95/5.

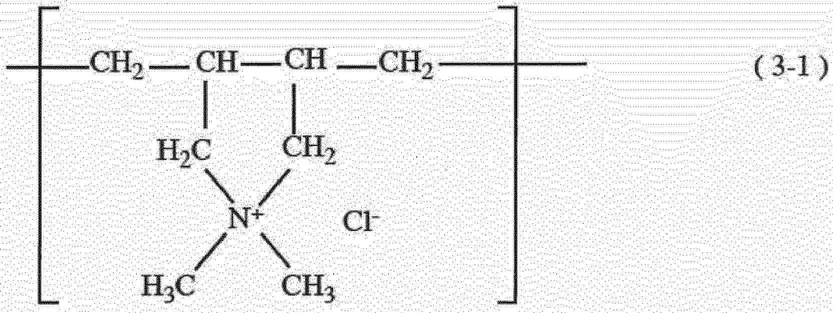

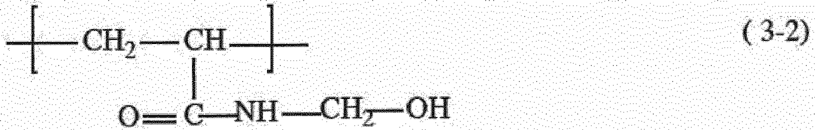

### ·Antistatic agent: IIB

Polymer compound having a number-average molecular weight of 30000 which was obtained by copolymerizing a constitutional unit represented by the above formula 3-1.

### ·Antistatic agent: IIC

Copolymer having a methyl sulfonate counter ion and a number-average molecular weight of 40000 which was constituted of 2-(trimethylamino)ethyl methacrylate/ethyl methacrylate/butyl methacrylate/polyethylene glycol-containing monoacrylate at a weight ratio of 75/12/15/30.

### ·Antistatic agent: IID

Antistatic agent having a number-average molecular weight of 50000 which was constituted of a constitutional unit represented by the following formula 4.

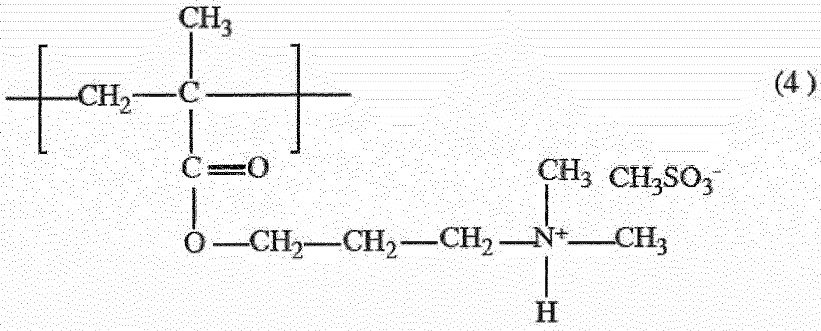

### ·Acrylic resin: (IIIA)

Water dispersion of an acrylic resin obtained by polymerizing the following composition

Emulsion polymer (emulsifier: anionic surfactant) produced from ethyl acrylate/n-butyl acrylate/methyl methacrylate/N-methylol acrylamide/acrylic acid = 65/21/10/2/2 (% by weight). The hydroxyl value of the acrylic resin was 11 mgKOH/g.

### ·Acrylic resin: (IIIB)

Water dispersion of an acrylic resin obtained by polymerizing the following composition

Emulsion polymer (emulsifier: anionic surfactant) produced from ethyl acrylate/methyl acrylate/2-hydroxyethyl methacrylate/N-methylol acrylamide/acrylic acid = 65/28/3/2/2 (% by weight). The hydroxyl value of the acrylic resin was 24 mgKOH/g.

### • Polyvinyl alcohol: (IIIC)

Polyvinyl alcohol having a saponification degree of 88 mol% and a polymerization degree of 500

### • Hexamethoxymethylol melamine: (IV)

### Example 1:

A mixed raw material obtained by mixing the polyesters (A) and (B) in amounts of 90% and 10%, respectively, as a raw material for outermost layers (surface layers), and a raw material for an intermediate layer comprising the polyester (A) solely, were respectively charged into two extruders, melted therein at 285°C, and then co-extruded therefrom on a chilled roll whose surface was controlled to a temperature of 40°C, into a two-kind/three-layer structure (surface layer/intermediate layer/surface layer = 1:8:1 as output), followed by cooling and solidifying the thus extruded sheet on the chilled roll, thereby obtaining an undrawn sheet. Next, the thus obtained undrawn sheet was drawn utilizing a difference between peripheral speeds of rolls at a film temperature of 85°C at a draw ratio of 3.4 times in a longitudinal direction thereof. Thereafter, a coating solution 1 shown in the below-mentioned Table 1 was applied on one surface of the thus obtained longitudinally drawn sheet. Then, the resulting coated sheet was introduced into a tenter where the sheet was drawn at 110°C at a draw ratio of 4.3 times in a lateral direction thereof and then heat-set at 235°C. Thereafter, the obtained drawn sheet was relaxed by 2% in a lateral direction thereof, thereby obtaining a polyester film having a thickness of 50 *µ*m which was provided on one surface thereof with a release layer having a thickness of 0.03 *µ*m (after dried).

As a result of evaluating the thus obtained polyester film, it was confirmed that the film exhibited good peel force, antistatic properties and transparency. The properties of the film are shown in Table 2 below.

### Examples 2 to 18:

The same procedure as in Example 1 was conducted except that the coating agent composition was changed to those shown in Table 1, thereby obtaining polyester films. Properties of the obtained polyester films were as shown in Table 2, i.e., the polyester films exhibited good releasing properties, antistatic properties and transparency.

### Comparative Example 1:

The same procedure as in Example 1 was conducted except that no coating layer was provided, thereby obtaining a polyester film. As a result of evaluating the resulting film, it was confirmed that properties of the film were as shown in Table 2, i.e., the film exhibited poor releasing properties and antistatic properties.

### Comparative Examples 2 to 4:

The same procedure as in Example 1 was conducted except that the coating agent composition was changed to those shown in Table 1, thereby obtaining polyester films. As a result of evaluating the thus obtained coated films, it was confirmed that properties of the coated films were as shown in Table 2, i.e., the coated films exhibited poor releasing properties, antistatic properties and transparency.

**Table 1**

| Coating solutions | Coating agent composition (wt%) | | | | | | | | |
|---|---|---|---|---|---|---|---|---|---|
| | IA | IIA | IIB | IIC | IID | IIIA | IIIB | IIIC | IV |
| 1 | 10 | 30 | 0 | 0 | 0 | 30 | 0 | 0 | 30 |
| 2 | 20 | 30 | 0 | 0 | 0 | 20 | 0 | 0 | 30 |
| 3 | 30 | 20 | 0 | 0 | 0 | 20 | 0 | 0 | 30 |
| 4 | 30 | 15 | 0 | 0 | 0 | 25 | 0 | 0 | 30 |
| 5 | 30 | 30 | 0 | 0 | 0 | 10 | 0 | 0 | 30 |
| 6 | 30 | 0 | 30 | 0 | 0 | 10 | 0 | 0 | 30 |
| 7 | 30 | 0 | 0 | 30 | 0 | 10 | 0 | 0 | 30 |
| 8 | 30 | 0 | 0 | 0 | 30 | 10 | 0 | 0 | 30 |
| 9 | 20 | 0 | 0 | 0 | 30 | 20 | 0 | 0 | 30 |
| 10 | 20 | 0 | 0 | 0 | 40 | 20 | 0 | 0 | 20 |
| 11 | 30 | 30 | 0 | 0 | 0 | 0 | 10 | 0 | 30 |
| 12 | 10 | 30 | 0 | 0 | 0 | 0 | 0 | 30 | 30 |
| 13 | 20 | 30 | 0 | 0 | 0 | 0 | 0 | 20 | 30 |
| 14 | 30 | 30 | 0 | 0 | 0 | 0 | 0 | 10 | 30 |
| 15 | 30 | 0 | 30 | 0 | 0 | 0 | 0 | 10 | 30 |
| 16 | 30 | 0 | 0 | 30 | 0 | 0 | 0 | 10 | 30 |
| 17 | 30 | 0 | 0 | 0 | 30 | 0 | 0 | 10 | 30 |
| 18 | 10 | 30 | 0 | 0 | 0 | 0 | 0 | 0 | 60 |
| 19 | 30 | 0 | 0 | 0 | 0 | 40 | 0 | 0 | 30 |
| 20 | 0 | 30 | 0 | 0 | 0 | 40 | 0 | 0 | 30 |

**Table 2**

| Examples and Comp. Examples | Coating solutions | Thickness (*µ*m) | Hz (%) | Peel force (mN/cm) | Surface resistance (Ω) |
|---|---|---|---|---|---|
| Example 1 | 1 | 0.03 | 1.0 | 1650 | 2x10¹⁰ |
| Example 2 | 2 | 0.03 | 1.2 | 400 | 2x10¹⁰ |
| Example 3 | 3 | 0.03 | 1.1 | 180 | 4x10¹¹ |
| Example 4 | 4 | 0.05 | 1.5 | 110 | 9x10¹¹ |
| Example 5 | 5 | 0.03 | 1.2 | 150 | 3x10¹⁰ |
| Example 6 | 6 | 0.03 | 1.3 | 550 | 2x10⁹ |
| Example 7 | 7 | 0.03 | 0.8 | 100 | 1x10¹¹ |
| Example 8 | 7 | 0.05 | 0.9 | 100 | 6x10¹⁰ |
| Example 9 | 8 | 0.03 | 1.0 | 220 | 1x10¹¹ |
| Example 10 | 9 | 0.03 | 0.9 | 420 | 8x10¹⁰ |
| Example 11 | 10 | 0.03 | 1.0 | 700 | 1x10¹⁰ |
| Example 12 | 11 | 0.03 | 1.2 | 120 | 2x10¹⁰ |
| Example 13 | 12 | 0.03 | 0.9 | 1330 | 1x10¹¹ |
| Example 14 | 13 | 0.03 | 0.9 | 490 | 8x10¹⁰ |
| Example 15 | 14 | 0.03 | 1.0 | 200 | 6x10¹⁰ |
| Example 16 | 15 | 0.03 | 1.0 | 520 | 4x10⁹ |
| Example 17 | 16 | 0.03 | 0.8 | 360 | 3x10¹¹ |
| Example 18 | 17 | 0.03 | 0.9 | 250 | 1x10¹¹ |
| Comp. Example 1 | - | - | 0.7 | 3070 | 7x10¹⁴ |
| Comp. Example 2 | 18 | 0.03 | 2.7 | 1180 | 3x10¹⁰ |
| Comp. Example 3 | 19 | 0.03 | 0.8 | 190 | 6x10¹⁴ |
| Comp. Example 4 | 20 | 0.03 | 0.9 | 3210 | 3x10¹⁰ |

### INDUSTRIAL APPLICABILITY

The coated film of the present invention can be suitably used, in particular, in the applications requiring peel properties, antistatic properties and transparency, for example, as a processing film used in various processes, including those films for transfer such as in-mold transfer, for production of flexible printed wiring boards, for process sheets for production of plastic sheets, etc., or a protective film such as a carrier tape and a cover tape.

## Claims

1. A coated film comprising a polyester film and a coating layer formed on at least one surface of the polyester film, which coating layer is prepared from a coating solution comprising:
- a release agent comprising a long-chain alkyl group-containing compound,
- an antistatic agent, and
- an acrylic resin or polyvinyl alcohol.

2. The coated film according to claim 1, wherein the long-chain alkyl group has 6 to 30 carbon atoms.

3. The coated film according to claim 1 or 2, wherein the long-chain alkyl group-containing compound is a polymer compound comprising a long-chain alkyl group on a side chain thereof.

4. The coated film according to claim 3, wherein the polymer compound comprising a long-chain alkyl group on a side chain thereof is a reaction product obtained by reacting a long-chain alkyl group-containing isocyanate with polyvinyl alcohol.

5. The coated film according to any one of claims 1 to 4, wherein the antistatic agent is an ion-conductive compound.

6. The coated film according to claim 5, wherein the ion-conductive compound is an ammonium group-containing compound.

7. The coated film according to any one of claims 1 to 6, wherein the acrylic resin is a hydroxyl group-containing acrylic resin having a hydroxyl value of 2 to 100 mgKOH/g.

8. The coated film according to any one of claims 1 to 7, wherein a content of the release agent comprising a long-chain alkyl group-containing compound in the coating solution is in the range of 8 to 70% by weight, a content of the antistatic agent in the coating solution is in the range of 10 to 70% by weight, and a content of the acrylic resin or polyvinyl alcohol in the coating solution is in the range of 3 to 70% by weight, all based on a total amount of whole non-volatile components in the coating solution.
